# FASCICULE DE BREVET EUROPEEN

(11) **EP 0 346 805 B1**
(45) Date de publication et mention de la délivrance du brevet: **13.10.1993**
(21) Numéro de dépôt: 89110611.4
(22) Date de dépôt: 12.06.1989
(51) Int. Cl.: H01H 33/56, H02B 13/02

(54) **Procédé pour le complément de remplissage en gaz d'un appareil électrique à gaz diélectrique sous pression**
Verfahren zur Ergänzung der Gasfüllung eines druckgasisolierten elektrischen Schaltgerätes
Method of gas inflation complement for a compressed insultating gas electric switch gear

(30) Priorité: 17.06.1988 FR 8808138
(43) Date de publication de la demande: 20.12.1989
(73) Titulaire: GEC ALSTHOM SA, 75116 Paris (FR)
(72) Inventeur: Bernard, Georges, F-69100 Villeurbanne (FR); Sauvat, René, F-69100 Villeurbanne (FR); Zacar, Alain, F-69390 Vernaison (FR)
(74) Mandataire: Weinmiller, Jürgen

(56) Documents cités:
- FR-A- 2 272 475
- FR-A- 2 415 871

## Description

La présente invention concerne les appareils à gaz diélectrique sous pression, tels que les disjoncteurs.

Le gaz peut être de l'hexafluorure de soufre, additionné ou non d'azote.

Dans l'état actuel de la technique, le remplissage d'un appareil avec du gaz diélectrique se fait en deux étapes.

La première a lieu en usine, où l'appareil est vidé de son air et rempli de gaz diélectrique. Après essais à la pression nominale, le gaz est ramené à une pression un peu supérieure à la pression atmosphérique. L'appareil est alors transporté sur le site d'exploitation où un complèment de remplissage est effectué.

Ce complément de remplissage se fait au moyen d'une bouteille contenant un volume de gaz souvent très supérieur au besoin. La bouteille est équipée d'un détendeur, d'une vanne, d'un manomètre de lecture et d'une tuyauterie.

Tout cet équipement coûte cher, et n'est généralement pas retourné à l'usine.

Par ailleurs sa mise en oeuvre est longue et nécessite un personnel qualifié. Il est nécessaire en effet, pour obtenir une pression de service correcte, de tenir compte de la température ambiante au moment du remplissage et d'ajuster la pression à l'aide d'une table de conversion pression-température.

Un but de l'invention est de réaliser un procédé pour le complément de remplissage en gaz diélectrique d'un appareil électrique tel qu'un disjoncteur qui permette de réaliser une économie tant sur le matériel utilisé que sur la main-d'oeuvre d'exécution.

La présente invention a pour objet un procédé pour compléter, sur le site d'utilisation, le remplissage en gaz diélectrique, d'un appareil électrique tel qu'un disjoncteur, préalablement rempli en usine dudit gaz à une pression un peu supérieure à la pression atmosphérique, caractérisé en ce qu'on utilise une bouteille sans détendeur et sans manomètre remplie dudit gaz et contenant une quantité de gaz calculée pour obtenir une pression légèrement supérieure à la pression de service.

Avantageusement, on utilise une bouteille munie d'un clapet auto-fermant.

En variante, on utilise une bouteille munie d'une vanne.

Cette bouteille peut être un produit de grande série du commerce (extincteur par exemple). Le remplissage en gaz de l'appareil se fait sans détendeur et sans manomètre ; le clapet, ou la vanne, est prévu pour être accouplé à l'orifice de remplissage du disjoncteur ; par suite aucune tuyauterie n'est nécessaire.

Les avantages du procédé de l'invention sont les suivants :
- Coût beaucoup plus faible (bouteille et accessoires).
- Quantité de gaz ajusté au besoin de l'appareil ce qui va dans le sens de la réduction du coût en gaz.
- Manipulation simplifiée au maximum pouvant être effectuée par un personnel sans qualification particulière (Plus besoin de courbe de correction pression-température).
- Encombrement réduit des bouteilles (expédition, stockage) celles-ci pouvant être fixées sur l'appareil lui-même.

## Revendications

1. Procédé pour compléter, sur le site d'utilisation, le remplissage en gaz diélectrique d'un appareil électrique tel qu'un disjoncteur, préalablement rempli en usine dudit gaz à une pression un peu supérieure à la pression atmosphérique, caractérisé en ce qu'on utilise une bouteille sans détendeur et sans manomètre remplie dudit gaz et contenant une quantité de gaz calculée pour obtenir une pression légèrement supérieure à la pression de service.

2. Procédé selon la revendication 1, caractérisé en ce qu'on utilise une bouteille munie d'un clapet auto-fermant.

3. Procédé selon la revendication 1, caractérisé en ce qu'on utilise une bouteille munie d'une vanne.

4. Procédé selon l'une des revendications 1 à 3, caractérisé en ce que la bouteille est fixée sur l'appareil.

## Claims

1. Method for completing on the site of use the filling with insulative gas of an electrical device such as a circuit-breaker previously filled in the manufacturing plant with said gas to a pressure slightly greater than atmospheric pressure, characterised in that a cylinder is used with no pressure regulator and no pressure gauge filled with said gas and containing a quantity of gas calculated to obtain a pressure slightly greater than the working pressure.

2. Method according to claim 1 characterised in that the cylinder is fitted with a self-closing valve.

3. Method according to claim 1 characterised in that the cylinder is fitted with a shut-off valve.

4. Method according to any one of claims 1 to 3 characterised in that the cylinder is fixed to the device.

## Patentansprüche

1. Verfahren, um am Verwendungsstandort das Füllen eines elektrischen Geräts wie eines Trennschalters mit dielektrischem Gas zu vervollständigen, das vorher in der Fabrik mit diesem Gas unter einem Druck gefüllt wurde, der nur wenig über Atmosphärendruck liegt, dadurch gekennzeichnet, daß man eine Flasche ohne Druckregler und ohne Manometer verwendet, die mit diesem Gas gefüllt ist und eine derart berechnete Gasmenge enthält, daß ein Druck erhalten wird, der geringfügig höher liegt als der Betriebsdruck.

2. Verfahren nach Anspruch 1, dadurch gekennzeichnet, daß man eine Flasche mit einer selbstschließenden Ventilklappe verwendet.

3. Verfahren nach Anspruch 1, dadurch gekennzeichnet, daß man eine Flasche mit einem Ventil verwendet.

4. Verfahren nach einem der Ansprüche 1 bis 3, dadurch gekennzeichnet, daß die Flasche auf dem Gerät befestigt ist.
